# EUROPEAN PATENT SPECIFICATION

(11) **EP 2 434 158 B1**
(45) Date of publication and mention of the grant of the patent: **07.08.2013**
(21) Application number: 10180361.7
(22) Date of filing: 27.09.2010
(51) Int. Cl.: F04C 15/00, F16D 1/06, F04C 2/344

(54) **Drive shaft for a positive displacement pump**
Antriebswelle für eine Verdrängerpumpe
Arbre d'entrainement pour une pompe volumétrique

(43) Date of publication of application: 28.03.2012
(73) Proprietor: Delphi Technologies Holding S.à.r.l., 4940 Bascharage (LU)
(72) Inventor: Rajaram, Kartik, Beckenham, Kent BR3 1NJ (GB); Buckley, Paul, Rainham, Kent ME8 9ES (GB)
(74) Representative: Neill, Andrew Peter

(56) References cited:
- DE-A1- 1 403 301
- DE-A1-102005 020 232
- JP-A- 3 060 982
- US-A1- 2006 185 124

## Description

### TECHNICAL FIELD

The invention relates to a drive shaft for driving a rotor of a positive displacement pump. Embodiments of the invention are particularly suitable for use in vane and gerotor pumps, particularly pumps for use in a fuel injection system.

### BACKGROUND TO THE INVENTION

Positive displacement pumps operate by trapping a volume of fluid in a cavity and then forcing the trapped fluid volume through an outlet. Rotary pumps form one class of positive displacement pump. In such pumps the rotation of one element relative to another is used to trap fluid in a defined cavity and then force the trapped volume out of the pump structure.

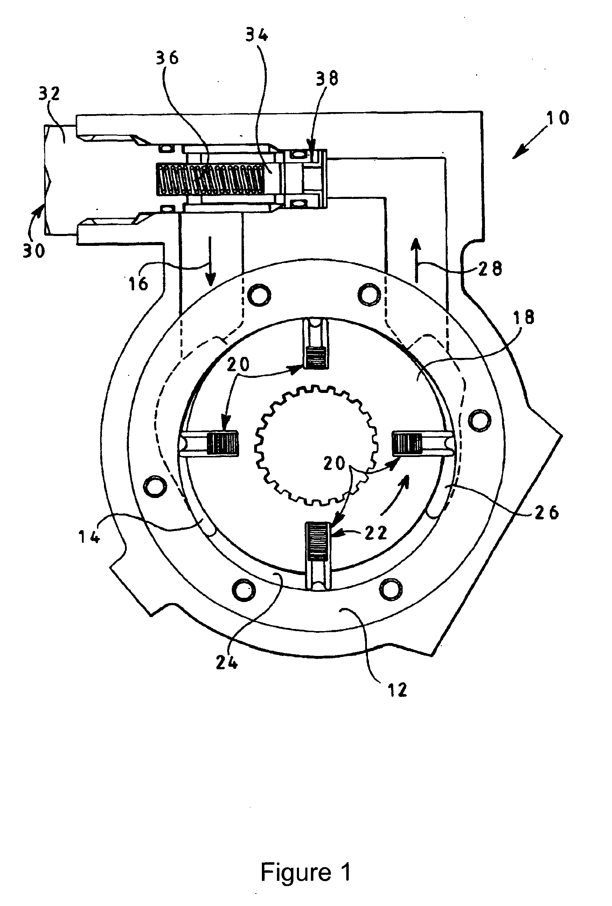

A vane pump is one type of rotary positive displacement pump. In a vane pump, a cylindrical rotor is rotated within a cylindrical housing. The rotor is mounted on an axis slightly displaced from the axis of the cylindrical housing so as to produce, in combination with sprung vanes mounted in recesses in the rotor, volumes in which fluid is trapped and then forced out of the pump. An example of a vane pump is shown in Figure 1, which is discussed further below.

Other types of rotary positive displacement pump also use a central rotor rotating with respect to an outer part, but use other approaches to define volumes. An example of such a pump is a gerotor, which uses a toothed inner rotor (typically trochoidal) with N teeth and a toothed outer rotor (typically a circle with intersecting circular arcs) with N+1 teeth. In a gerotor both rotors generally rotate.

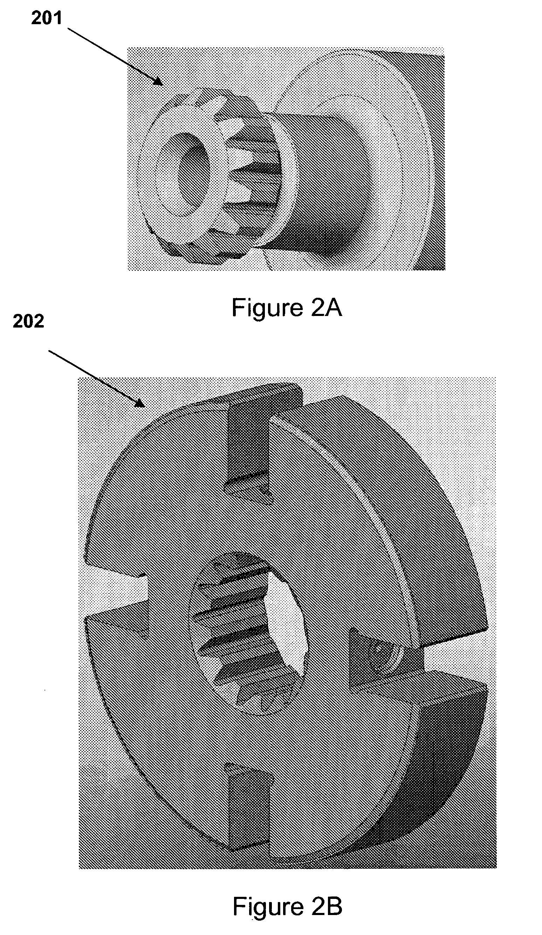

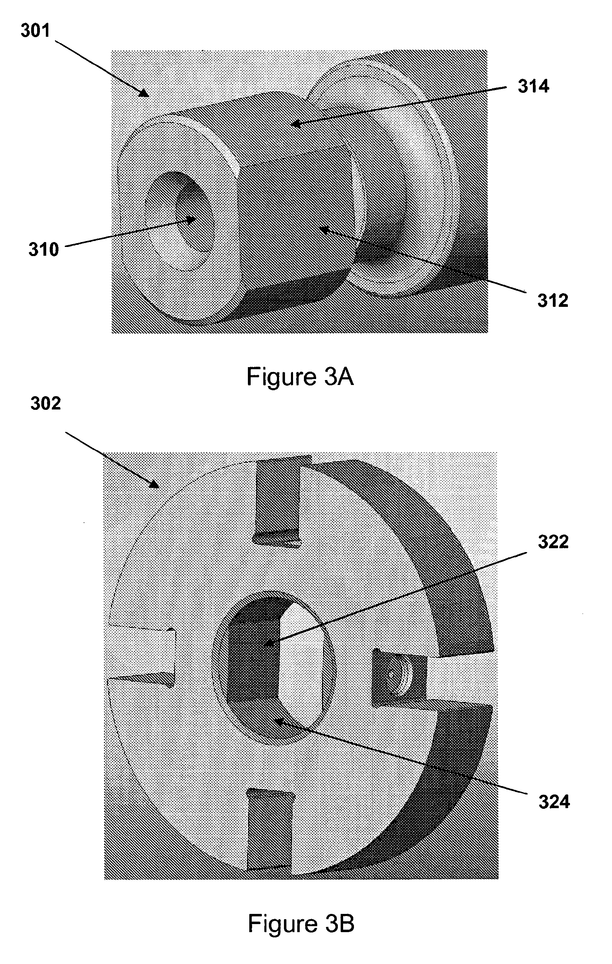

In either type of rotary positive displacement pump, the central rotor will generally be driven by mounting it upon a driveshaft such as the one disclosed in DE 1 403 301, considered to represent the closest prior art document. For a robust design, this rotor is typically not fixed to the driveshaft but mounted so that it can articulate to some degree, with the driveshaft driving the rotor torsionally. Figures 2A and 2B and 3A and 3B shown two different prior art approaches to providing a torsional drive for a rotor allowing for articulation. In the Figure 2A and Figure 2B arrangement, a splined coupling is used - Figure 2A shows the driveshaft 201 and Figure 2B shows the rotor 202 for such a coupling. In the Figure 3A and Figure 3B arrangement, a coupling with two flat portions and two cylindrical section portions is used - Figure 3A shows the driveshaft 301 and Figure 3B shows the rotor 302 for such a coupling. This type of coupling is variously known as a Double-D drive, DD drive, tang drive or twin flat drive. The term "twin flat drive" will be generally used hereafter to describe drives of this type.

While it is desirable to provide some degree of articulation in the drive to make the drive more able to tolerate catastrophic failure, current designs lead to excessive wear resulting from relative movement between the driveshaft and the rotor. It would be desirable to reduce material wear while still retaining satisfactory articulation.

### SUMMARY OF THE INVENTION

According to the present invention, there is provided a driveshaft for driving a rotor of a positive displacement pump, the driveshaft comprising: an axis of rotation; a plurality of flat surfaces arranged symmetrically around the axis of rotation and substantially parallel to it; a plurality of cylindrical surfaces arranged around the axis of rotation and extending between adjacent ones of the flat surfaces; wherein a length of the flat surfaces in a direction parallel to the axis of rotation is greater than a length of the cylindrical surfaces in a direction parallel to the axis of rotation.

This arrangement is advantageous, as it allows for clearance between the driveshaft and the rotor to be reduced without loss of articulation, which leads to less slippage between the driveshaft and the rotor and hence less material wear.

This arrangement is particularly effective when applied to a twin flat drive, in which there are two flat surfaces and two cylindrical surfaces, wherein the two flat surfaces are substantially parallel to each other. The advantages of a twin flat drive over a spline drive in achieving reduced contact stress are retained, while providing improved part life over a conventional twin flat drive.

Advantageously, the ratio between the lengths of the flat surfaces and the lengths of the cylindrical surfaces is between 3 and 4, preferably between 3.4 and 3.8.

It is also advantageous if the ratio between the dimensions of the flat surfaces and the cylindrical surfaces in a direction orthogonal to the central axis is between 0.65 and 0.85. This provides a larger area over which drive is provided to the rotor, enabling the drive to be more efficient.

In a further aspect, the invention provides a drive system for a positive displacement pump, comprising a driveshaft as described above and a rotor, the rotor having internal flat surfaces for transferring drive from the flat surfaces of the driveshaft and internal cylindrical surfaces complementary to the cylindrical surfaces of the driveshaft.

Advantageously, a ratio of clearance to length of the cylindrical surfaces is substantially equal to the ratio of the clearance to length for the flat surfaces. While this ratio will typically not be exactly equal - the clearance may not be a linear function of length, as it may in practice be somewhat affected by other dimensions such as diameter and by any other functional requirements on the system (such as for embodiments in which the shaft is a part of a high pressure pump system).

In a further aspect, the invention provides a positive displacement pump comprising a drive system described above. The positive displacement pump may be a vane pump.
In a further aspect, the invention provides a fuel injector system comprising a positive displacement pump as described above to provide fuel to a high pressure pump of the fuel injector system.

### BRIEF DESCRIPTION OF THE DRAWINGS

The invention will now be described, by way of example only, by reference to the following drawings in which:
Figure 1 shows an exemplary vane pump for use in a fuel injection system, wherein the pump is of a type in which embodiments of the invention may be used;
Figures 2A and 2B show a prior art spline driveshaft and rotor for use in a positive displacement pump;
Figures 3A and 3B show a prior art twin flat driveshaft and rotor for use in a positive displacement pump;
Figure 4 shows a driveshaft according to an embodiment of the invention suitable for use with the rotor of Figure 3B; and
Figures 5A to 5D show additional views of the driveshaft of Figure 4.

### DETAILED DESCRIPTION OF PREFERRED EMBODIMENTS

Figure 1 shows an example of a conventional vane pump design for use in a fuel injection system - embodiments of the present invention may be used to improve this conventional design. This conventional vane pump design will now be described to indicate an overall pump design, and the elements of a fuel injector, which may incorporate improvements as described below and hence implement embodiments of the invention.

The vane pump 10 comprises a cylindrical liner 12 and an inlet port for receiving fuel from a fuel tank (direction of fuel flow is shown by arrow 16). The pump further comprises a rotor 18 driven by a driveshaft. This driveshaft may also drive an associated high pressure fuel injection pump (not shown) to which the vane pump supplies fuel. The rotor 18 carries blades 20 maintained in contact with the inner surface of the liner 12 by means of any or all of a spring 22, fuel pressure at the radial inner end of the blade, and centripetal force. Fuel is introduced at the inlet 14 and, on rotation of the blades 20 past the inlet, the fuel is trapped in a gap 24 between the liner 12 and the rotor 18 and fuel is carried in this cavity as it moves with the blades 20 as the rotor 18 rotates.

As the rotor 18 continues to rotate, the blades 20 uncover an outlet port 26. Fuel is expelled from the cavity, and hence from the vane pump 10, through the outlet port 26 in the direction of the arrow 28. The expelled fuel is either supplied to the downstream high pressure pump or is returned to the vane pump inlet through a regulator 30. The structure of the regulator is not significant for the present invention and is not discussed further here - further aspects of the design of this vane pump and of variants in which embodiments of the present invention may be employed are described in EP 1035327 A2.

Embodiments of the invention involve an improvement to the conventional twin flat drive arrangement shown in Figures 3A and 3B. The driveshaft 301 shown in Figure 3A has a central axis 310 and two types of surface provided to be adjacent to the rotor 302 shown in Figure 3B. Two flat surfaces 312 are provided symmetrically on either side of the central axis 310 - these surfaces provide the drive to complementary internal flat surfaces 322 of the rotor 302. Two cylindrical surfaces 314 are provided, again symmetrically on either side of the central axis 310, bridging between the two flat surfaces and allowing a close fit with complementary internal cylindrical surfaces 324 of the rotor 302. As discussed above, this arrangement allows for some articulation, but the relative movement between the shaft and the rotor leads to excessive material wear.

The vane pump is typically a self-contained unit and is an accessory driven by a shaft. The primary function of the shaft is to be a part of the high pressure system, so the relative alignments of components are determined to some degree by this primary function.

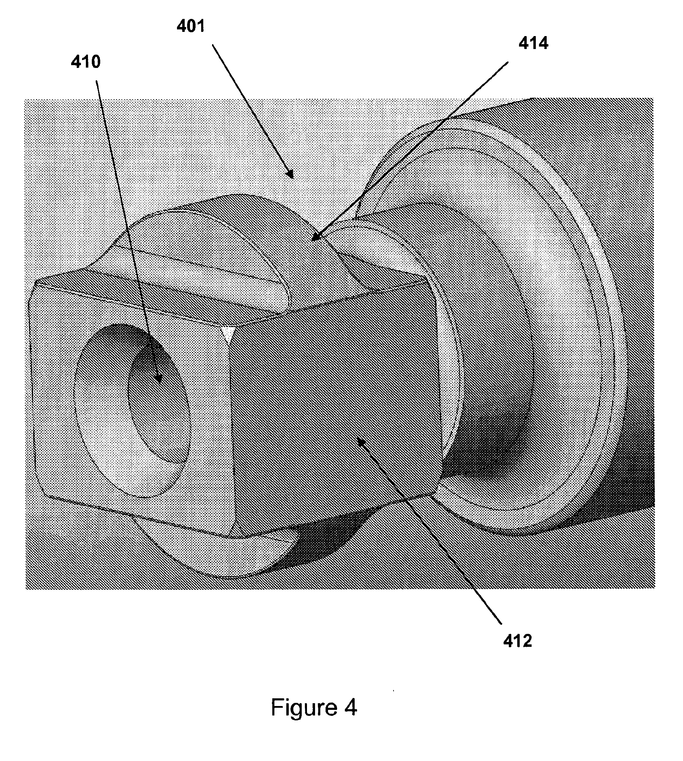

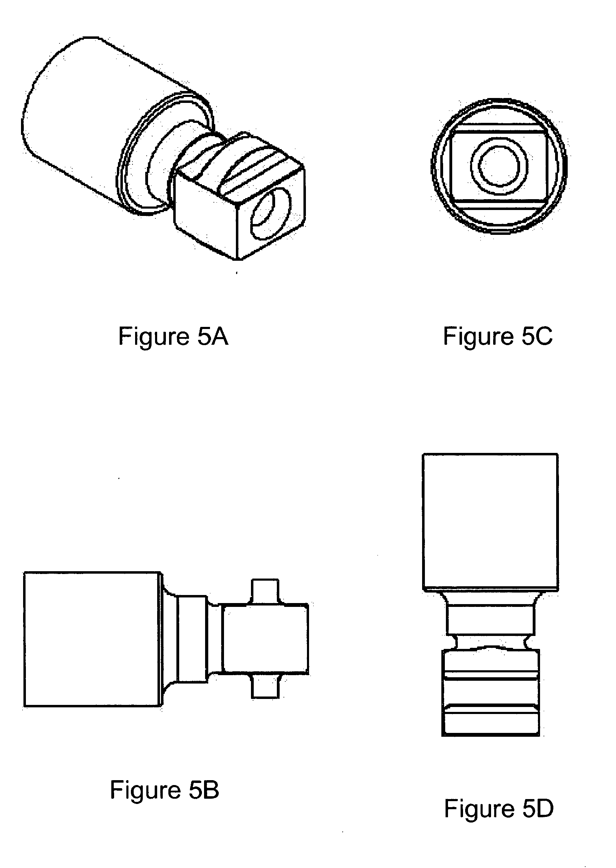

An alternative design of driveshaft 401 according to an embodiment of the invention is shown in Figure 4, with alternative views in Figures 5A to 5D (Figure 5A provides a perspective view, Figure 5B provides a side elevation, Figure 5C provides an end elevation, and Figure 5D provides a plan view). In this design, the flat surfaces 412 are longer in the dimension parallel to the central axis 410 of the driveshaft 401 than the cylindrical surfaces 414. This is primarily achieved by a significant reduction in the length of the cylindrical surfaces 414. Advantageously, the ratio of the flat surface length to the cylindrical surface length is between 3 and 4, with a ratio between 3.4 and 3.8 being appropriate in this arrangement.

The driveshaft 401 is suitable for use with the rotor 302 shown in Figure 3B, although it allows for an improved combination between the two elements. In particular, the relatively reduced length of the cylindrical surfaces 414 allows for these to be produced with a tighter clearance between these surfaces and the complementary cylindrical surfaces 324 of the rotor 302. For example, this clearance may be set to be as little as 0.1 % of the diameter of the cylindrical surfaces 324. The reduction in length in the cylindrical surfaces 414 for the driveshaft 401 allows tighter clearances to be achieved without an unacceptable loss of articulation. Advantageously, a ratio of clearance to length of the cylindrical surfaces is substantially equal to the ratio of the clearance to length for the flat surfaces. The clearance may not in practice be a linear function of the length - it may be weakly dependent on diameter, and may also be constrained if other components are relevant (as, for example, when the driveshaft is also part of a high pressure pump system).

The flat surfaces 412 of the driveshaft 401 thus provide drive to the rotor 302 in the same manner as before. However, the change in the relative lengths of the flat surfaces 412 and the cylindrical surfaces 414 allows this to be done with less material wear. A further approach to reduce wear - not shown explicitly here - is to increase the height of the flat surfaces 412 (that is, the dimension orthogonal to the central axis 410) with a consequent reduction in the equivalent dimension of the cylindrical surfaces 414. This allows drive to be provided more efficiently to the rotor. This ratio cannot be increased indefinitely without effects on stability of the component or on the drive arrangement itself. Preferably, the ratio between the flat surface height and the cylindrical surface height lies between 0.65 and 0.85. Complementary changes to the internal surfaces of the rotor would be required, though as the skilled person will appreciate, this is a straightforward matter of adjusting the relevant surface dimensions to achieve the same contact and clearance arrangements as for the Figure 4 design.

The drive arrangement described here is advantageous as it allows for the lower contact stresses of a twin flat drive as compared to a spline design. It should be noted, however, that this arrangement could also be employed with multiple flats symmetrically arranged around the central axis rather than just the twin flat arrangement shown here. This provides similar advantages to those described above. By use of embodiments of the present invention, sliding between driving surfaces is reduced, thereby reducing material wear and increasing part life.

## Claims

1. A driveshaft (401) for driving a rotor of a positive displacement pump, the driveshaft (401) comprising:
an axis of rotation;
a plurality of flat surfaces (412) arranged symmetrically around the axis of rotation and substantially parallel to it;
a plurality of cylindrical surfaces (44) arranged around the axis of rotation and extending between adjacent flat surfaces;
**characterised in that** a length of the flat surfaces (412) in a direction parallel to the axis of rotation is greater than a length of the cylindrical surfaces (414) in a direction parallel to the axis of rotation

2. A driveshaft as claimed in claim 1, wherein there are two flat surfaces and two cylindrical surfaces, wherein the two flat surfaces are substantially parallel to each other.

3. A driveshaft as claimed in claim 1 or claim 2, wherein the ratio between the lengths of the flat surfaces and the lengths of the cylindrical surfaces is between 3 and 4.

4. A driveshaft as claimed in claim 3, wherein the ratio between the lengths of the flat surfaces and the lengths of the cylindrical surfaces is between 3.4 and 3.8.

5. A driveshaft as claimed in any preceding claim, wherein the ratio between the dimensions of the flat surfaces and the cylindrical surfaces in a direction orthogonal to the central axis is between 0.65 and 0.85.

6. A drive system for a positive displacement pump, comprising a driveshaft as claimed in any of claims 1 to 5 and a rotor, the rotor having internal flat surfaces for transferring drive from the flat surfaces of the driveshaft and internal cylindrical surfaces complementary to the cylindrical surfaces of the driveshaft.

7. A drive system as claimed in claim 6, wherein a ratio of clearance to length of the cylindrical surfaces is substantially equal to the ratio of the clearance to length for the flat surfaces.

8. A positive displacement pump comprising the drive system of claim 6 or claim 7.

9. A positive displacement pump according to the claim 8, wherein the positive displacement pump is a vane pump.

10. A fuel injector system comprising a positive displacement pump as claimed in claim 8 or claim 9 to provide fuel to a high pressure pump of the fuel injector system.

## Patentansprüche

1. Antriebswelle (401) zum Antreiben eines Rotors einer Verdrängerpumpe, wobei die Antriebswelle (401) Folgendes aufweist:
eine Drehachse,
eine Vielzahl flacher Oberflächen (412), die symmetrisch um die Drehachse und im Wesentlichen parallel zu ihr angeordnet sind,
eine Vielzahl zylindrischer Oberflächen (414), die um die Drehachse angeordnet sind und zwischen benachbarten flachen Oberflächen verlaufen,
**dadurch gekennzeichnet, dass** eine Länge der flachen Oberflächen (412) in einer zu der Drehachse parallelen Richtung größer ist als eine Länge der zylindrischen Oberflächen (414) in einer zu der Drehachse parallelen Richtung.

2. Antriebswelle nach Anspruch 1, wobei es zwei flache Oberflächen und zwei zylindrische Oberflächen gibt, wobei die zwei flachen Oberflächen im Wesentlichen parallel zueinander sind.

3. Antriebswelle nach Anspruch 1 oder 2, wobei das Verhältnis zwischen der Länge der flachen Oberflächen und der Länge der zylindrischen Oberflächen zwischen 3 und 4 beträgt.

4. Antriebswelle nach Anspruch 3, wobei das Verhältnis zwischen der Länge der flachen Oberflächen und der Länge der zylindrischen Oberflächen zwischen 3,4 und 3,8 beträgt.

5. Antriebswelle nach einem der vorhergehenden Ansprüche, wobei das Verhältnis zwischen den Abmessungen der flachen Oberflächen und der zylindrischen Oberflächen in einer zur Mittelachse orthogonalen Richtung zwischen 0,65 und 0,85 beträgt.

6. Antriebssystem für eine Verdrängerpumpe, das eine Antriebswelle nach einem der Ansprüche 1 bis 5 und einen Rotor aufweist, wobei der Rotor innere flache Oberflächen zum Übertragen der Antriebskraft von den flachen Oberflächen der Antriebswelle und innere zylindrische Oberflächen, die zu den zylindrischen Oberflächen der Antriebswelle komplementär sind, hat.

7. Antriebssystem nach Anspruch 6, wobei ein Verhältnis von Spiel zu Länge der zylindrischen Oberflächen im Wesentlichen gleich dem Verhältnis des Spiels zur Länge für die flachen Oberflächen ist.

8. Verdrängerpumpe, die das Antriebssystem nach Anspruch 6 oder Anspruch 7 aufweist.

9. Verdrängerpumpe nach Anspruch 8, wobei die Verdrängerpumpe eine Drehschieberpumpe ist.

10. Kraftstoffeinspritzsystem, das eine Verdrängerpumpe nach Anspruch 8 oder Anspruch 9 zum Versorgen einer Hochdruckpumpe des Kraftstoffeinspritzsystems mit Kraftstoff aufweist.

## Revendications

1. Arbre d'entraînement (401) pour entraîner un rotor d'une pompe volumétrique, farbre d'entraînement (401) comprenant :
un axe de rotation ;
une pluralité de surfaces planes (412) agencées symétriquement autour de l'axe de rotation et sensiblement parallèles à celui-ci ;
une pluralité de surfaces cylindriques (414) agencées autour de l'axe de rotation et s'étendant entre des surfaces planes adjacentes ;
**caractérisé en ce que**
une longueur des surfaces planes (412) dans une direction parallèle à l'axe de rotation est supérieure à une longueur des surfaces cylindriques (414) dans une direction parallèle à l'axe de rotation.

2. Arbre d'entraînement selon la revendication 1, dans lequel il existe deux surfaces planes et deux surfaces cylindriques, et les deux surfaces planes sont sensiblement parallèles l'une à l'autre.

3. Arbre d'entraînement selon la revendication 1 ou 2, dans lequel le rapport entre les longueurs des surfaces planes et les longueurs des surfaces cylindriques est entre 3 et 4.

4. Arbre d'entraînement selon la revendication 3, dans lequel le rapport entre les longueurs des surfaces planes et les longueurs des surfaces cylindriques est entre 3,4 et 3,8.

5. Arbre d'entraînement selon l'une quelconque des revendications précédentes, dans lequel le rapport entre les dimensions des surfaces planes et des surfaces cylindriques dans une direction orthogonale à l'axe central est entre 0,65 et 0,85.

6. Système d'entraînement pour une pompe volumétrique, comprenant un arbre d'entraînement selon l'une quelconque des revendications 1 à 5 et un rotor, le rotor ayant des surfaces internes planes pour transférer un entraînement depuis les surfaces planes de l'arbre d'entraînement et des surfaces cylindriques intérieures complémentaires aux surfaces cylindriques de l'arbre d'entraînement.

7. Système d'entraînement selon la revendication 6, dans lequel un rapport du jeu sur la longueur des surfaces cylindriques est sensiblement égal au rapport du jeu sur la longueur des surfaces planes.

8. Pompe volumétrique comprenant le système d'entraînement de la revendication 6 ou 7.

9. Pompe volumétrique selon la revendication 8, dans laquelle la pompe volumétrique est une pompe à palettes.

10. Système d'injection de carburant comprenant une pompe volumétrique selon la revendication 8 ou 9 pour fournir du carburant à une pompe à haute pression du système d'injection de carburant.
